# FASCICULE DE BREVET EUROPEEN

(11) **EP 0 485 935 B1**
(45) Date de publication et mention de la délivrance du brevet: **15.01.1997**
(21) Numéro de dépôt: 91119196.3
(22) Date de dépôt: 11.11.1991
(51) Int. Cl.: H04Q 7/22, H04B 1/40

(54) **Circuit de traitement du signal pour le système de radiotéléphone cellulaire numérique européen**
Signalverarbeitungseinheit für das europäische digitale zellulare Funktelefonsystem
Signal processing circuit for the european digital cellular radio-telephone system

(30) Priorité: 15.11.1990 FR 9014211
(43) Date de publication de la demande: 20.05.1992
(73) Titulaire: ALCATEL MOBILE COMMUNICATION FRANCE, 75008 Paris (FR)
(72) Inventeur: Rousseau, Emmanuel, F-75008 Paris (FR); Dartois, Luc, F-78955 Carrieres sous Poissy (FR)
(74) Mandataire: Weinmiller, Jürgen

(56) Documents cités:
- ELECTRICAL COMMUNICATION vol. 63, no. 4, 1989, ROMFORD (GB) pages 409 - 414; M. RAHIER ET AL: 'Advanced LSI Components for Digital Cellular Mobile Radio'
- IEEE INTERNATIONAL SYMPOSIUM ON CIRCUITS AND SYSTEMS vol. 2, 1988, ESPOO (FI) pages 1803 - 1810; E. KUISMA ET AL: 'Signal Processing Requirements in Pan-European Digital Mobile Communications'
- ELECTRONIC ENGINEERING vol. 62, no. 763, Juillet 1990, WOOLWICH (GB) pages 16 - 17; 'ASIC family provides mobile radio functions'
- FUNKSCHAU vol. 62, no. 12, Juin 1990, MüNCHEN (DE) pages 64 - 68; F. LEYRER: 'Mobile Kommunikation. Mega-Chips fürs Taschentelefon'

## Description

La présente invention concerne un circuit de traitement numérique du signal qui trouve application dans le système de radiotéléphone numérique cellulaire européen défini par le Groupe Spécial Mobile (ci-après dénommé le "GSM") de l'institut européen de normalisation des télécommunications connu sous le terme anglais "European Telecommunications Standards Institute" (ETSI).

Ce circuit est prévu, notamment, pour effectuer la partie numérique du traitement du signal nécessaire dans un terminal qu'il soit mobile, portable ou portatif. On entend ici par terminal l'appareil qui permet d'accéder au réseau de communication. Cet emploi n'est pas exhaustif, le circuit pouvant être éventuellement utilisé dans d'autres éléments du système de radiotéléphone.

Le circuit de traitement du signal doit, par conséquent, remplir toutes les fonctions détaillées ci-après, ces fonctions étant spécifiées sous la forme de recommandations édictées par le GSM. Compte-tenu du nombre et de la complexité de ces fonctions, il doit nécessairement présenter une structure programmable. La solution couramment mise en oeuvre consiste à réaliser ce circuit selon une architecture parallèle, c'est-à-dire à employer plusieurs processeurs, chacun d'entre eux effectuant une partie de ces fonctions, solution décrite notamment dans les articles "Advanced VLSI components for digital cellular mobile radio"- Electrical Communication, volume 63, n°4, p.409 à 414 - et "Signal processing requirements in Pan-european digital mobile communications" - IEEE International symposium on circuits and systems, volume 2, 7 à 9 juin 1988, pages 1803 à 1810 -. Cette solution offre une certaine souplesse car les différentes fonctions sont réparties. Elle nécessite cependant des organes d'interface entre ces processeurs et un organe de commande pour coordonner le fonctionnement de ces processeurs. Ces différents organes contribuent de manière non négligeable à la taille du circuit. De plus, les processeurs employés étant relativement complexes, il est difficile d'envisager l'intégration du circuit dans un seul composant compte-tenu des technologies actuellement disponibles. Le circuit comprenant plusieurs composants, il est encombrant, ce qui est un obstacle à la miniaturisation du terminal dans lequel il est implanté, et il est également coûteux. Par ailleurs, le logiciel du circuit comprend, outre les différents programmes nécessaires pour l'exécution des fonctions proprement dites, les programmes qui assurent la coopération des organes et processeurs de ce circuit. Il est donc volumineux.

Une autre solution consisterait à employer un processeur unique pour le circuit chargé d'assurer toutes les fonctions de traitement du signal. Un tel processeur devrait être très puissant en terme de nombre d'instructions exécutables par unité de temps et les technologies de fabrication actuellement disponibles ne permettent pas sa réalisation.

En tout état de cause, si les progrès rapides de la microélectronique permettent d'envisager à plus ou moins brève échéance la disponibilité d'un processeur de ce type, celui-ci serait très coûteux. Par ailleurs, le logiciel de traitement du signal serait complexe car de type multitâche et nécessiterait par conséquent une mémoire importante pour sa conservation.

La présente invention a ainsi pour objet un circuit de traitement du signal pour le système de radiotéléphone défini par le GSM qui présente une taille réduite, prévu pour être intégré en un seul composant, et dont le logiciel associé est également plus performant en ce qui concerne la taille de mémoire nécessaire. Il s'ensuit que ce circuit est économique tant au niveau de la consommation que de celui du coût.

Le circuit de traitement du signal pour le système de radiotéléphone cellulaire numérique européen selon l'invention échangeant continûment des échantillons de paroles avec un circuit de conversion, échangeant des signaux numériques en bande de base avec un circuit radio et échangeant des données et des informations de signalisation avec un circuit de commande qui lui transmet également des signaux de commande, comprend un opérateur de commande, un processeur qui commande un opérateur audio et un opérateur radio, l'opérateur audio recevant et produisant les échantillons de parole et les transmettant au processeur, respectivement les recevant du processeur sous forme de groupe d'échantillons, l'opérateur radio recevant et produisant les signaux numériques en bande de base et les transmettant au processeur, respectivement les recevant du processeur sous forme de lots, l'opérateur de commande acheminant et formatant les données, les informations de signalisation et les signaux de commande du processeur, le processeur étant prévu pour faire le traitement numérique du signal, particulièrement dans un terminal, à partir des informations produites par les opérateurs et pour produire les informations destinées à ces opérateurs, et étant ainsi déchargé des traitements effectués par les opérateurs.

De plus, dans le circuit de traitement du signal pour le système de radiotéléphone cellulaire numérique européen, l'opérateur audio comprend un module d'émission audio qui effectue, outre la mise en groupe des échantillons de parole, la première partie du codage de la parole.

En outre, dans le circuit de traitement du signal pour le système de radiotéléphone cellulaire numérique européen, l'opérateur audio comprend un module de réception audio qui effectue, outre la transmission des échantillons de parole à partir des groupes d'échantillons, la dernière partie de décodage de la parole.

Par ailleurs, dans le circuit de traitement du signal pour le système de radiotéléphone cellulaire numérique européen, l'opérateur radio comprend un module d'émission radio qui effectue, outre la transmission des signaux numériques en bande de base à partir de lots, la modulation des paliers fournis dans ce cas par le processeur à la place des lots.

Avantageusement, dans le circuit de traitement du signal pour le système de radiotéléphone cellulaire numérique européen, l'opérateur radio comprend un module de réception radio qui effectue, outre la mise en lots des signaux numériques en bande de base, une estimation de la composante continue de ces signaux.

Selon une première caractéristique additionnelle du circuit de traitement du signal pour le système de radiotéléphone cellulaire numérique européen, le module de réception radio effectue de plus une correction de la composante continue sur les signaux numériques en bande de base.

Selon une deuxième caractéristique additionnelle du circuit de traitement du signal pour le système de radiotéléphone cellulaire numérique européen, le module de réception radio effectue de plus une mesure de la puissance des signaux numériques en bande de base.

Selon une troisième caractéristique additionnelle du circuit de traitement du signal pour le système de radiotéléphone cellulaire numérique européen, le module de réception radio effectue de plus une translation en fréquence des signaux numériques en bande de base.

Selon une quatrième caractéristique additionnelle du circuit de traitement du signal pour le système de radiotéléphone cellulaire numérique européen, le module de réception radio effectue de plus un filtrage des signaux numériques en bande de base.

Dans un mode de réalisation du circuit de traitement du signal pour le système de radiotéléphone cellulaire numérique européen, le processeur comprenant un organe de traitement et une mémoire, la mémoire est accédée directement par l'un au moins des modules d'émission audio, de réception audio, d'émission radio et de réception radio.

Il est de même prévu dans le circuit de traitement du signal pour le système de radiotéléphone cellulaire numérique européen, le processeur comprenant un organe de traitement, qu'il comprenne de plus au moins un opérateur spécialisé couplé à cet organe de traitement.

Dans une variante de réalisation du circuit de traitement du signal pour le système de radiotéléphone cellulaire numérique européen, l'organe de traitement est prévu pour fonctionner à l'aide d'un logiciel de traitement série.

De manière avantageuse, dans le circuit de traitement du signal pour le système de radiotéléphone cellulaire numérique européen, l'opérateur de commande comprend un module d'activation prévu pour adapter les signaux de commande issus du circuit de commande et pour produire les signaux d'horloge nécessaires au processeur et aux modules d'émission audio de réception audio d'émission radio et de réception radio.

Dans une forme privilégiée du circuit de traitement du signal pour le système de radiotéléphone cellulaire numérique européen, l'opérateur de commande comprend un module d'interface effectuant le transfert des données et des informations de signalisation sans les interpréter.

L'invention sera maintenant mieux comprise dans le cadre d'un exemple de réalisation donné à titre non limitatif en se référant aux figures annexées qui représentent :
- la figure 1, le schéma synoptique d'un terminal
- la figure 2, le schéma synoptique du circuit de traitement du signal de l'invention,
- la figure 3, un schéma plus détaillé de ce circuit où les différents signaux de commande sont représentés en traits épais tandis que les différentes données sont en traits fins.

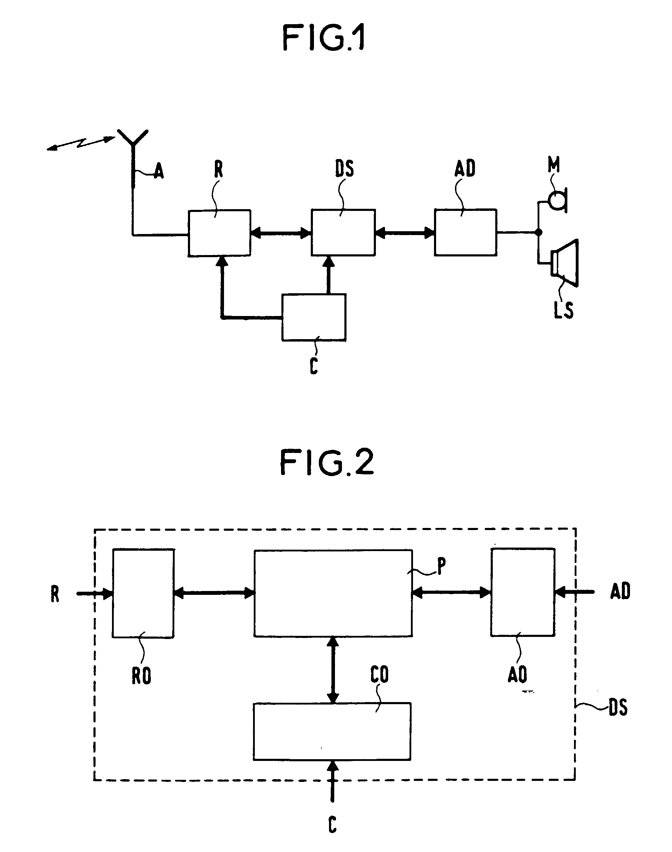

Le circuit de l'invention sera décrit en tant que partie d'un terminal représenté à la figure 1. Ce terminal échange des informations au moyen d'un signal radio avec une station de base non représentée qui est un point d'accès au réseau de communication. Il comprend donc une antenne A reliée à un circuit radio R qui, à la réception transforme ce signal radio en un signal numérique en bande de base et, à l'émission effectue l'opération inverse. Il comprend le circuit de traitement du signal DS qui à la réception effectue différentes opérations sur le signal de réception en bande de base pour produire un signal numérique de parole à destination d'un circuit de conversion AD ou des données à destination d'un circuit de commande C et, à l'émission effectue les opérations inverses. Le circuit de conversion AD effectue les conversions numérique-analogique et analogique-numérique pour assurer l'interface entre le micro M et le haut-parleur LS du terminal avec le circuit de traitement du signal.

Le circuit de commande C dirige le fonctionnement du terminal, notamment en commandant le circuit radio et le circuit de traitement du signal.

Les différentes fonctions que doit effectuer le circuit de traitement du signal seront maintenant détaillées de manière à pouvoir définir précisément les liaisons de ce circuit avec les autres circuits du terminal et les liaisons internes entre ses différents éléments.

Les références citées des recommandations du GSM affectées de leurs numéros de version sont les plus récentes publiées à ce jour, et sont donc accessibles. Les éléments qui y figurent seront sans doute repris dans des publications ultérieures.

Le GSM définit deux types de canaux de communication qui relient un terminal à une station de base :
- les canaux de trafic qui acheminent les communications, qu'il s'agisse de parole ou de données, connus sous le nom de canaux TCH,
- les canaux de signalisation qui permettent d'assurer le fonctionnement du système.

Dans un premier temps, ce sont les fonctions d'émission qui seront décrites, celles qui transmettent des informations du terminal à une station de base.

La parole fait l'objet d'un traitement spécifique qui ne s'applique ni aux données ni aux canaux de signalisation.

La parole se présente sous la forme d'échantillons de 13 bits à la fréquence de 8 kHz fournis par le circuit de conversion AD qui reçoit sur son entrée le signal issu de micro du terminal.

La première étape du traitement consiste à effectuer un codage de ces échantillons connu sous le nom anglais de "Regular Pulse Excitation-Linear Predictive Coding using Long Term Prediction", soit en abrégé codage du type RPE-LPC-LTP. Ce codage entièrement défini dans la recommandation 06.10 version 3.2.0 du GSM produit à partir de 160 échantillons un bloc de 260 bits, ceci toutes les 20 millisecondes.

La deuxième étape consiste à effectuer une détection d'activité vocale. Cette détection mesure l'énergie contenue dans les échantillons de parole sur un bloc et produit un signal d'activité vocale si cette énergie dépasse un seuil. Elle est entièrement définie dans la recommandation 06.32 version 3.0.0 du GSM.

La troisième étape consiste à effectuer une analyse du bruit de confort. En l'absence du signal d'activité vocale, le bruit transmis par le micro est analysé sur quatre blocs successifs de manière à produire un seul bloc de bruit de même format, c'est-à-dire de 260 bits. Cette étape est décrite dans la recommandation 06.12 version 3.0.0 du GSM.

La quatrième étape traite l'émission discontinue spécifiée dans la recommandation 06.31 version 3.1.0 du GSM. En fonction de l'état du signal d'activité vocale et d'un indicateur de transmission fourni par le circuit radio du terminal, sont produits un signal d'émission autorisant ou interdisant l'émission d'un bloc (bloc de parole ou bloc de bruit) et un signal de fin de parole signifiant la présence ou l'absence d'un bloc de bruit.

Le traitement de la parole a donc pour objet de produire des blocs de bits qui entrent dans la définition d'un canal de traffic au même titre qu'un ensemble de données.

Le canal de traffic nommé dorénavant canal TCH, et les différents canaux de signalisation font l'objet d'un traitement de canal.

Parmi les canaux de signalisation à l'émission présentés dans la recommandation 05.01 version 3.3.1 du GSM figurent :
- le canal de commande rapide associé, nommé canal FACCH,
- le canal de commande lent associé, nommé canal SACCH,
- le canal à accès aléatoire, nommé canal RACH,
- le canal de commande non associé, nommé canal SDCCH.

Le canal FACCH est prioritaire sur tous les autres canaux, canal TCH inclus, à l'exception du canal RACH. Le GSM a prévu un indicateur de vol de bloc précisant que le canal FACCH prend la place du canal normalement prévu.

L'ensemble de ces canaux subissent un traitement de canal défini dans la recommandation 05.03 version 3.5.1 du GSM qui consiste pour un bloc de bits (qui est soit un bloc de parole ou de bruit engendré par le traitement de la parole, soit un bloc de données, soit un bloc d'informations de signalisation) en un codage et un entrelacement.

Pour tous les canaux à l'exception du canal RACH le codage transforme un bloc en un bloc codé de 456 bits.

Pour le canal TCH véhiculant de la parole et pour les canaux FACCH et SDCCH, le bloc codé est ensuite entrelacé une première fois pour former 8 sous-blocs de 57 bits. Dans chaque sous-bloc est introduit l'indicateur de vol de bloc associé au bloc concerné, puis les quatre premiers sous-blocs d'un bloc codé déterminé sont ensuite entrelacés avec les quatre derniers sous-blocs du bloc codé précédent, ce qui produit un bloc entrelacé de 464 bits.

Pour le canal TCH véhiculant des données et pour le canal SACCH, le bloc codé subit un entrelacement différent qui ne sera pas plus détaillé car apparaissant également dans la recommandation 05.03 du GSM.

Le canal RACH fait lui aussi l'objet d'un codage et d'un entrelacement pour aboutir à un bloc entrelacé de 36 bits.

Les différents canaux, à l'exception du canal RACH font ensuite l'objet d'un chiffrement qui est partiellement décrit dans la recommandation 03.20 version 3.3.0 du GSM, l'algorithme de chiffrement étant classé confidentiel. Les blocs entrelacés sont subdivisés en 4 parties de 116 bits, chacune de ces parties étant chiffrée pour donner un paquet de 116 bits. Le canal RACH n'étant pas chiffré, on considérera pour ce canal qu'un paquet est un bloc entrelacé.

Les différents paquets sont ensuite traités pour être mis au format du système de transmission à accès multiple à répartition dans le temps défini par le GSM. Selon ce système les informations sont supportées par des trames de huit intervalles de temps, chaque intervalle de temps comprenant 156,25 bits.

Le traitement des paquets spécifiés dans les recommandations 05.01 version 3.3.1 et 05.02 version 3.4.1 du GSM consiste à produire un palier au format d'un intervalle de temps à partir d'un paquet et de bits de contrôle. On distingue le palier normal de 148 bits réalisé à partir d'un paquet provenant des canaux TCH, FACCH, SACCH et SDCCH et le palier d'accès de 88 bits réalisé à partir d'un paquet provenant du canal RACH.

Un seul intervalle de temps par trame est utilisé pour l'émission. De plus, il occupe toujours la même position au sein des trames successives.

La dernière fonction à l'émission est la modulation numérique des bits formant les paliers. La modulation est du type à déplacement minimal. Elle est décrite dans la recommandation 05.04 version 3.1.1 du GSM. Elle produit à partir des bits d'un palier deux signaux d'émission modulés en bande de base conventiellement référencés I et Q à la fréquence de 270,33 kHz. Chaque couple de valeur de ces signaux numériques (I, Q) quantifiée chacune sur 8 bits correspond à un bit du palier. De plus, la modulation introduit, à la suite du palier, des bits de garde afin de former les 156,25 bits correspondant à un intervalle de temps.

Les signaux d'émission en bande de base sont acheminés au circuit radio R du terminal.

Les fonctions d'émissions étant exposés, les fonctions de réception seront maintenant décrites.

Le circuit radio transmet au circuit de traitement du signal les deux signaux de réception en bande de base I', Q' homologues des signaux d'émission en bande de base I,Q.

Parmi les différents canaux de réception on distingue notamment :
- le canal de diffusion, nommé canal BCCH,
- le canal de contrôle de fréquence, nommé canal FCH,
- le canal de synchronisation, nommé canal SCH,
- le canal de contrôle commun, nommé canal CCCH,
- le canal de commande rapide associé, nommé canal FACCH,
- le canal de commande lent associé, nommé canal SACCH,
- le canal de commande non associé, nommé canal SDCCH,
- le canal de traffic, canal nommé TCH.

La première fonction de réception est la synchronisation, c'est-à-dire la procédure qui permet à un terminal de se connecter à une station de base.

Le canal de diffusion véhicule les informations nécessaires à la synchronisation du terminal. Il permet notamment d'identifier les canaux de contrôle de fréquence et le canal de synchronisation qui sont utilisés pour cette synchronisation.

Le terminal considère que le canal de diffusion émis par la station de base à laquelle il doit se connecter est le canal qu'il reçoit avec la plus forte puissance. Il doit donc disposer d'une fonction de mesure de puissance.

La fonction de mesure de puissance consiste à établir une liste des canaux les mieux reçus à partir d'une liste de canaux sondés identifiés par leurs fréquences. Elle permet d'isoler le canal de diffusion intéressant et de caractériser les canaux de diffusion émis par les stations de base voisines qui sont susceptibles d'être utilisés par le terminal au cours d'un déplacement, par exemple.

La synchronisation proprement dite, une fois que le canal de diffusion intéressant a été reconnu, consiste à détecter successivement le canal de contrôle de fréquence et le canal de synchronisation. Ces opérations permettent de connaître précisément la fréquence des différents canaux émis par la station de base et de connaître la référence de temps de cette station, ce qui donne le moyen de reconnaître les intervalles de temps et les trames du système de transmission.

La fonction de réception suivante est la fonction de démodulation qui peut être effectuée dès que le terminal est synchronisé. Elle concerne les canaux BCCH, CCCH, FACCH, SACCH, SDCCH, SCH et TCH. Elle permet de retrouver un paquet de 116 bits à partir des valeurs successives des signaux de réception en bande de base I', Q' durant un intervalle de temps. Elle correspond à la modulation faite par la station de base qui, pour mémoire, est décrite dans la recommandation 05.04 du GSM.

Vient ensuite la fonction de déchiffrement qui, à partir d'un paquet restitue un bloc entrelacé de 116 bits. L'algorithme de déchiffrement qui correspond à l'algorithme de chiffrement n'est que partiellement décrit dans la recommandation 03.20 du GSM étant donné son caractère confidentiel.

Une fois le déchiffrement effectué, vient le traitement de canal à la réception qui permet de récupérer un bloc (parole, données ou signalisation) à la suite du désentrelacement et du décodage de blocs entrelacés. Le désentrelacement correspond à l'entrelacement décrit plus haut en rapport avec le traitement des canaux à l'émission, il ne sera donc pas d'avantage détaillé. De même, le décodage correspond au codage de canal décrit plus haut. Il peut prendre différentes formes parmi lesquelles la plus fréquente est un décodage de Viterbi qui a pour objet de retrouver avec la probabilité maximale le bloc qui a fait l'objet du codage correspondant à l'émission.

Les blocs ainsi obtenus sont orientés vers le circuit de commande si ce sont des blocs de données ou de signalisation en tenant compte de l'indicateur de vol de bloc.

Les blocs de parole, eux, font l'objet d'un traitement de parole à la réception qui comprend quatre fonctions.

La première fonction est le traitement de l'émission discontinue qui est définie dans la recommandation 06-31 du GSM. Ce traitement permet, à partir d'informations fournies par le circuit de commande précisant si un bloc est un bloc de parole et s'il a été bien ou mal reçu, de commander l'une des fonctions suivantes.

La deuxième fonction est le décodage de la parole définie dans la recommandation 06.10 du GSM. Elle permet à partir d'un bloc de parole de 260 bits de regénérer 160 échantillons de 13 bits à la fréquence de 8 kHz à destination du circuit de conversion.

La troisième fonction est l'insertion du bruit de confort défini dans la recommandation 06.12 du GSM. Elle est mise en oeuvre lorsqu'il n'y avait pas d'activité vocale pendant la période d'émission du canal TCH correspondante. Elle consiste à régénerer un bruit de confort à partir des informations contenues dans le bloc de bruit reçu. Elle comprend également une opération de décodage de canal qui diffère légèrement de celle effectuée sur un bloc de parole. Elle produit également une série de 160 échantillons de 13 bits à 8 kHz à destination du circuit de conversion.

La quatrième fonction est le procédé d'extrapolation de la parole décrit dans la recommandation 06.11 version 3.0.0 GSM. Elle est mise en oeuvre lorsqu'un bloc a été mal reçu. Elle consiste soit à reproduire le bloc précédent, soit à produire un signal dont le niveau décroit progressivement jusqu'à zéro, ceci toujours à destination du circuit de conversion.

Les principales fonctions du circuit de traitement du signal DS étant maintenant précisées, ce circuit sera maintenant décrit en se référant à la figure 2.

Il comprend un processeur P relié à un opérateur audio AO, un opérateur radio RO et un opérateur de commande CO.

L'opérateur audio AO reçoit du circuit de conversion AD et produit à destination de ce même circuit des échantillons de parole suivant la norme définie dans la recommandation 06.10 du GSM.

L'opérateur radio RO produit à destination du circuit radio et reçoit de ce même circuit les signaux numériques en bande de base.

L'opérateur de commande CO reçoit du circuit de commande C et transmet à ce même circuit les informations de signalisation véhiculés par les canaux de signalisation et les données véhiculés par le canal de traffic. Il permet également d'acheminer les signaux de commande du circuit de traitement du signal.

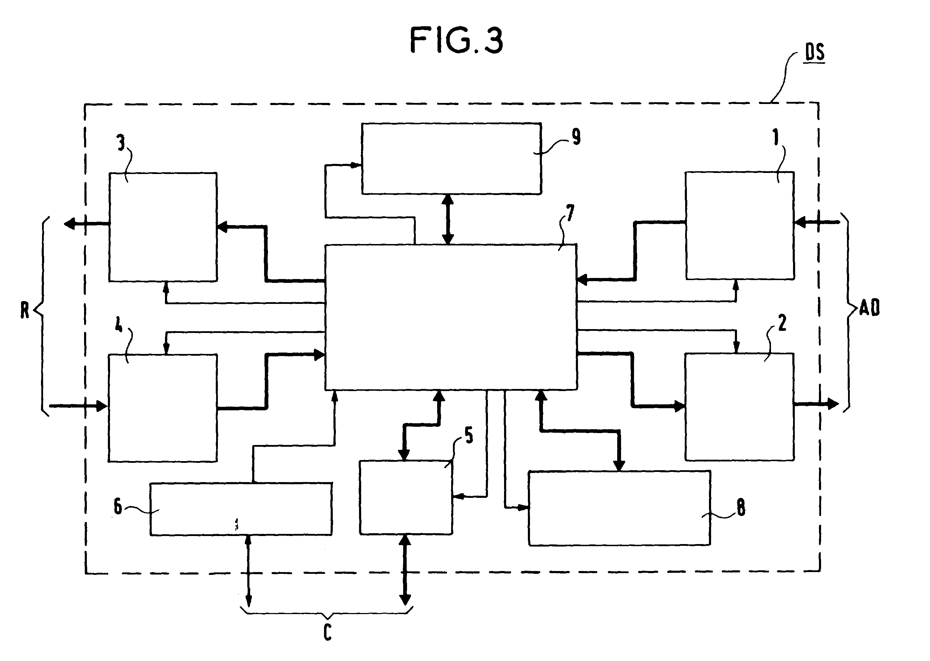

Les différents organes du circuit de traitement du signal seront maintenant détaillés en référence à la figure 3. Chacun de ces organes a été décomposé en plusieurs éléments. Cette décomposition correspond à un mode de réalisation du circuit et présente de plus l'avantage de simplifier la description. Elle n'est pas la seule possible et il ne faut pas voir là une limitation de l'invention.

L'opérateur audio AO comprend un module d'émission audio 1 et un module réception audio 2.

Le module d'émission audio 1 reçoit les échantillons de parole de 13 bits à la fréquence de 8 kHz que le circuit de conversion produit à partir du signal issu du micro. Il formate ces échantillons de manière à les rendre compatibles avec le processeur et les mémorise temporairement de manière que le processeur fasse l'acquisition de ces échantillons formatés par groupe de 160. Cette opération simplifie le logiciel de traitement de la parole et minimise le nombre d'interruptions, soit une interruption toutes les 20 ms alors que dans le cas d'un traitement continu des échantillons, une interruption est nécessaire toutes les 0,125 ms.

Selon une caractéristique additionnelle mais non indispensable le module d'émission audio 1 est également prévu pour faire la première partie du codage de la parole définie dans la recommandation 06.10 du GSM sous le terme anglais de "Speech preprocessing". Cette partie du codage consiste en une annulation de tension de décalage ("offset" dans la recommandation) et en un filtrage d'accentuation ("Preemphasis" dans la recommandation).

Le module de réception audio 2 reçoit du processeur des groupes de 160 échantillons au rythme d'un groupe toutes les 20ms, échantillons qu'il mémorise temporairement et met en forme de manière à ce qu'il soient compatibles avec le circuit de conversion. Il délivre ces échantillons mis en forme de 13 bits successivement à la cadence de 8 kHz au circuit de conversion qui est chargé de les convertir en un signal assimilable par le haut-parleur du terminal. Ce module présente les mêmes avantages que le précédent quant à la fréquence des interruptions du processeur.

Selon une caractéristique additionnelle mais non indispensable, le module de réception audio est également prévu pour effectuer la dernière partie du décodage de la parole telle que définie également dans la recommandation 06.10 du GSM sous le terme anglais de "Speech post processing". Cette partie du décodage consiste en un filtrage de modération ("Deemphasis" dans la recommandation).

L'opérateur radio RO comprend un module d'émission radio 3 et un module de réception radio 4.

Le module d'émission radio 3 est avantageusement prévu pour effectuer la fonction de modulation. Il reçoit du processeur et mémorise temporairement les paliers précédemment définis pour produire les signaux d'émission en bande de base I, Q éventuellement formatés pour traitement par le circuit radio R. La modulation est faite "au fil de l'eau" sur les bits du palier, c'est-à-dire qu'ils sont transmis sans délai dès leur modulation. Ceci permet d'utiliser une mémoire moins importante que dans le cas contraire où il serait nécessaire d'enregistrer les signaux en bande de base I, Q avant leur transfert au circuit radio R. Ainsi, la fonction de modulation étant effectuée par ce module, le processeur se trouve déchargé de cette tâche. Par ailleurs, il est soumis à des interruptions moins nombreuses, que s'il devait lui-même fournir les signaux en bande de base au circuit radio.

Selon une caractéristique additionnelle mais non indispensable, les signaux d'émission en bande de base I, Q sont suréchantillonnés d'un facteur 8 ou 16, par exemple, dans ce module, ce qui est une opération courante pour l'homme de l'art.

Le module de réception radio 4 reçoit du circuit radio R les signaux de réception en bande de base I', Q' chacun à une fréquence voisine de 270 kHz. Il formate ces signaux et mémorise temporairement les valeurs successives prises par ces signaux de manière que le processeur les acquièrent par lot pour les traiter. Le nombre d'éléments d'un tel lot est fixé par le processeur et dépend notamment du type de canal de réception dont il s'agit étant donné que le traitement effectué à la réception est fonction du canal. Ainsi le processeur fait l'acquisition d'un lot et non pas d'une succession de valeurs, ce qui présente les avantages déjà mentionnés.

Il est également prévu, de manière optionnelle, que le module de réception radio 4 effectue certaines opérations supplémentaires détaillées ci-dessous.

Une première opération consiste à effectuer une estimation de la composante continue introduite par le circuit radio R dans les signaux en bande de base I', Q'. Cette estimation est faite en prenant la valeur moyenne d'une série de valeurs de chacun de ces signaux. Ces valeurs moyennes sont ensuite mémorisées pour transmission au processeur P. Dans une variante, c'est directement la somme de ces valeurs qui est mémorisée et non leur valeur moyenne, le processeur connaissant le nombre de valeurs comprises dans une série et effectuant lui-même la moyenne.

Une deuxième opération consiste à effectuer une correction de la composante continue présente dans des signaux en bande de base. Dans ce cas une valeur de correction fournie par le processeur pour chacun des deux signaux I', Q' est ajoutée à ces signaux préalablement à leur mémorisation. Les valeurs de correction sont avantageusement établies par le processeur à partir des valeurs moyennes acquises lors de la première opération.

Une troisième opération consiste à calculer la puissance des signaux en bande de base I', Q' après correction de la composante continue. Compte-tenu de la modulation employée, la puissance instantanée de ces signaux est proportionnelle à la somme des carrés des valeurs prises par chacun des signaux à un instant donné. Cette puissance instantanée est mémorisée pour transmission au processeur ou bien, selon une solution avantageuse, c'est la somme des puissances instantanées d'une série de valeurs qui est mémorisée.

Une quatrième opération consiste à effectuer une translation en fréquence des signaux en bande de base. Cette opération est une nécessité dans la démodulation, compte-tenu du procédé de modulation employé. Après correction de la composante continue, chaque couple de valeurs des signaux en bande de base qui peut être considéré comme un nombre complexe subit un déphasage négatif de valeur π/2 multiplié par son ordre d'apparition à compter d'un instant d'origine. Cet instant d'origine, purement arbitraire, peut être celui de la mémorisation du premier couple de valeurs; il importe essentiellement que ce soit le même pour chacun des couples. Les couples de valeurs ainsi translatés en fréquence sont mémorisés pour transmission au processeur.

Une cinquième opération consiste à effectuer un filtrage qui peut être utilisé notamment dans la phase de synchronisation du terminal. Les couples de valeurs translatés en fréquence sont additionnés par série pour produire un couple de valeurs filtrées, le nombre de couples d'une série étant fourni par le processeur. Les couples de valeurs filtrés sont mémorisés pour transmission au processeur.

Les données mémorisées lors des différentes opérations décrites ci-dessus sont acquises par lot par le processeur, à son initiative, et non pas au fur et à mesure de leurs élaborations.

A titre d'exemple, différents modes de fonctionnement du module de réception radio seront maintenant exposés.

Un premier mode de fonctionnement s'applique pendant la phase de synchronisation lorsque le canal de réception est un canal de diffusion. Il est alors prévu que l'estimation de la composante continue, la correction de la composante continue et la mesure de puissance doivent être effectuées. Le processeur fournit le nombre de couples de valeurs des signaux en bande de base à traiter, soit 144 par exemple. Il fournit également le nombre n1 de valeurs sur lesquelles est faite l' estimation de la composante continue, 16 par exemple, le nombre n2 de couples de valeurs sur lesquels est faite la mesure de puissance, 16 par exemple, et les valeurs de correction des deux signaux en bande de base. A l'issue du traitement sont mémorisées n'1 estimations de composante continue pour chacun de ces signaux, n'1 étant ici égal à 9, et n'2 valeurs de puissance où n'2 est aussi égal à 9.

Un deuxième mode de fonctionnement s'applique lorsque le canal de réception est un canal de contrôle de fréquence. Il est alors prévu que la correction de la composante continue, la mesure de puissance, la translation en fréquence et le filtrage doivent être effectués. Le processeur fournit le nombre de couples de valeurs des signaux en bande de base à traiter, soit 1408 par exemple. Il fournit également le nombre n2 de couples de valeurs sur lesquels est faite la mesure de puissance, 64 par exemple, le nombre n3 de couples de valeurs sur lesquels est fait le filtrage, 16 par exemple et les valeurs de correction des deux signaux en bande de base. A l'issue du traitement sont mémorisées n'2 valeurs de puissance, n'2 étant ici égal à 22, et n'3 couples de valeurs filtrées où n'3 vaut ici 88.

Un troisième mode de fonctionnement s'applique notamment lorsque le canal de réception est un canal de traffic. Il est alors prévu que la correction de la composante continue, la mesure de puissance et la translation en fréquence doivent être effectueés. Le processeur fournit le nombre de couples de valeurs des signaux en bande de base à traiter, soit 156 par exemple. Il fournit également le nombre n2 de couples de valeurs sur lesquels est faite la mesure de puissance 39 par exemple et les valeurs de correction des deux signaux en bande de base. A l'issue du traitement sont mémorisées 156 couples de valeurs translatées et n'2 valeurs de puissance, n'2 valant ici 4.

L'opérateur radio est maintenant défini.

L'opérateur de commande CO comprend un module d'interface 5 et un module d'activation 6.

Le module d'interface 5 est une simple interface de transfert entre le processeur P et le circuit de commande C. Il effectue le transfert et le formatage des données circulant entre ces deux circuits sans en effectuer une interprétation quelconque. L'interprétation est faite soit par le circuit de commande, soit par le processeur, selon le sens de circulation. Les données transmises par ce module sont des informations de signalisation, des données associés à un canal de traffic ou des signaux de configuration du processeur dans un mode de fonctionnement déterminé.

Le module d'activation 6 adapte les signaux de commande (activation, remise à zéro, par exemple) provenant du circuit de commande C pour les rendre compréhensibles par le processeur P. C'est également dans ce module que sont élaborés les horloges nécessaires aux différents modules à partir d'un signal de rythme produit par le circuit de commande. Il s'agit notamment de l'horloge de base du processeur et de l'horloge de transfert de données correspondant à la fréquence de transfert du circuit de conversion.

A titre d'exemple numérique, le signal de rythme a une fréquence de 26 MHz et le module d'activation produit l'horloge de base du processeur à 78 MHz, ce qui correspond à une puissance de 39 millions d'instructions par seconde, et l'horloge de transfert des données à 104 kHz, car les échantillons de parole de 13 bits à la fréquence de 8kHz sont fournis bit à bit.

Le processeur P comprend un organe de traitement 7 proprement dit associé à une mémoire 8. Il est également prévu, de manière optionnelle, que l'organe de traitement soit couplé à au moins un opérateur spécialisé 9. Selon cette technique connue, l'opérateur spécialisé décharge l'organe de traitement d'une partie des traitements à effectuer pour une tâche donnée, ce qui permet au processeur d'effectuer globalement cette tâche plus rapidement.

Dans un premier mode de réalisation du circuit de traitement du signal, les modules d'émission audio 1, de réception audio 2, d'émission radio 3 et de réception radio 4 possèdent chacun une mémoire tampon pour les échanges d'information avec le processeur. C'est le cas représenté dans la figure 3.

Dans un second mode de réalisation non représenté dans la figure, la mémoire 8 centralise toutes les informations produites ou reçues par les différents modules du circuit de traitement du signal. Cet agencement est connu sous l'expression anglaise "Direct Memory Access", DMA en abrégé. L'avantage de cette solution par rapport à une solution décentralisée où plusieurs mémoires sont associées à différents modules est qu'elle permet une réduction de la taille de mémoire. En effet, la solution décentralisée nécessite des zones intermédiaires de stockage. De plus, pour une quantité donnée d'informations à mémoriser, une mémoire unique prend moins de place que plusieurs mémoires. Par contre, il faut prévoir un contrôleur qui organise l'accès des différents modules à la mémoire. Ce contrôleur occupe une certaine place dans le circuit et impose de nombreuses interruptions supplémentaires du processeur.

L'organe de traitement 7 est un processeur de signal de type généraliste, c'est-à-dire qu'il n'est pas dédié à une application particulière. Il effectue toutes les fonctions de traitement numérique du signal prévues par le GSM à l'exception de celles qui sont effectuées par les autres modules du circuit de traitement du signal DS et qui ont été mentionnées dans la description.

On peut envisager deux types de logiciel selon lesquels peut fonctionner l'organe de traitement 7, un logiciel de traitement parallèle et un logiciel de traitement série. Le logiciel de traitement parallèle, comme son nom l'indique, effectue les différents traitement en parallèle en suivant un ordre de priorité. Il nécessite un espace de mémoire supplémentaire pour stocker les données intermédiaires produites au cours d'un traitement. Il est également plus complexe car il doit incorporer le programme d'ordonnancement des différents traitements. Le logiciel de traitement série effectue successivement les différents traitements sans les interrompre. Il est plus simple, donc de taille plus réduite que le précédent. Il demande cependant une puissance plus importante à l'organe de traitement en terme de nombre d'instructions éxécutables par unité de temps. Il est ainsi prévu d'adjoindre éventuellement au moins un opérateur spécialisé à l'organe de traitement. En effet cet organe de traitement est d'autant plus cher qu'il est puissant.

L'opérateur spécialisé 9, à titre d'exemple, effectue une partie des fonctions de traitement du signal qui nécessitent un temps important. C'est le cas, par exemple, des fonctions de codage de la parole, de décodage de canal et de la démodulation.

Le circuit de traitement du signal DS étant examiné, son fonctionnement sera maintenant décomposé en plusieurs phases.

Lors de la première phase, le circuit de commande C active le circuit de traitement du signal c'est-à-dire qu'il précise au processeur P qu'il va lui adresser des informations, ceci au moyen du module d'activation 6.

Lors de la deuxième phase, le circuit de commande C configure le processeur P dans un mode de fonctionnement particulier spécifiant les différents traitements à effectuer, ceci au moyen du module d'interface 6.

Lors de la troisième phase, le processeur interprète les informations données par le circuit de commande et positionne en conséquence les modules d'émission audio 1, de réception audio 2, d'émission radio 3 et de réception radio 4 dans leurs modes de fonctionnement respectifs qui sont choisis essentiellement parmi un ou plusieurs modes de travail et un ou plusieurs modes de test. Comme exposé précédemment, le module de réception radio 4 possède plusieurs modes de travail.

Lors de la dernière phase, les différents organes fonctionnent selon le séquencement défini par le GSM particulièrement dans les séries 5 et 6 des recommandations.

Le séquencement peut se décomposer en un séquencement général et un séquencement de mode. Le séquencement général est à l'initiative du circuit de commande C qui positionne, lors de la deuxième phase, le circuit de traitement du signal dans un mode définissant un ensemble de traitements à effectuer.

Le séquencement du mode définissant l'enchaînement des traitements dans un mode particulier est à l'initiative du processeur P.

## Revendications

1. Circuit de traitement du signal pour le système de radiotéléphone cellulaire numérique européen, échangeant continûment des échantillons de paroles avec un circuit de conversion (AD), échangeant des signaux numériques en bande de base avec un circuit radio (R) et échangeant des données et des informations de signalisation avec un circuit de commande (C) qui lui transmet également des signaux de commande, caractérise en ce qu'il comprend un opérateur de commande (CO), un processeur (P) qui commande un opérateur audio (AO) et un opérateur radio (RO), ledit opérateur audio (AO) recevant et produisant lesdits échantillons de parole et les transmettant audit processeur respectivement, les recevant dudit processeur sous forme de groupes d'échantillons, ledit opérateur radio (RO) recevant et produisant lesdits signaux numériques en bande de base et les transmettant audit processeur, respectivement les recevant dudit processeur sous forme de lots, ledit opérateur de commande (CO) acheminant et formatant lesdites données, lesdites informations de signalisation et lesdits signaux de commande dudit processeur (P), ledit processeur étant prévu pour faire le traitement numérique du signal, particulièrement dans un terminal, à partir des informations produites par lesdits opérateurs et pour produire les informations destinées auxdits opérateurs, et étant ainsi déchargé des traitements effectués par lesdits opérateurs.

2. Circuit de traitement du signal pour le système de radiotéléphone cellulaire numérique européen selon la revendication 1, caractérisé en ce que ledit opérateur audio (AO) comprend un module d'émission audio (1) qui effectue, outre la mise en groupe desdits échantillons de parole, la première partie du codage de la parole.

3. Circuit de traitement du signal pour le système de radiotéléphone cellulaire numérique européen selon la revendication 1 ou 2, caractérisé en ce que ledit opérateur audio (AO) comprend un module de réception audio (2) qui effectue, outre la transmission desdits échantillons de parole à partir desdits groupes d'échantillons, la dernière partie du décodage de la parole.

4. Circuit de traitement du signal pour le système de radiotéléphone cellulaire numérique européen selon l'une quelconque des revendications précédentes, caractérisé en ce que ledit opérateur radio (RO) comprend un module d'émission radio (3) qui effectue, outre la transmission desdits signaux numériques en bande de base à partir de lots, la modulation des paliers fournis dans ce cas par ledit processeur (P) à la place desdits lots.

5. Circuit de traitement du signal pour le système de radiotéléphone cellulaire numérique européen selon l'une quelconque des revendications précédentes, caractérisé en ce que ledit opérateur radio (RO) comprend un module de réception radio (4) qui effectue, outre la mise en lots desdits signaux numériques en bande de base, une estimation de la composante continue de ces signaux.

6. Circuit de traitement du signal pour le système de radiotéléphone cellulaire numérique européen selon la revendication 5 caractérisé en ce que ledit module de réception radio (4) effectue de plus une correction de la composante continue sur lesdits signaux numériques en bande de base.

7. Circuit de traitement du signal pour le système de radiotéléphone cellulaire numérique européen selon la revendication 5 ou 6, caractérisé en ce que ledit module de réception radio (4) effectue de plus une mesure de la puissance desdits signaux numériques en bande de base.

8. Circuit de traitement du signal pour le système de radiotéléphone cellulaire numérique européen selon la revendication 6 ou 7, caractérisé en ce que ledit module de réception radio (4) effectue de plus une translation en fréquence desdits signaux numériques en bande de base.

9. Circuit de traitement du signal pour le système de radiotéléphone cellulaire numérique européen selon la revendication 8, caractérisé en ce que ledit module de réception radio (4) effectue de plus un filtrage desdits signaux numériques en bande de base.

10. Circuit de traitement du signal pour le système de radiotéléphone cellulaire numérique européen selon l'une quelconque des revendications précédentes caractérisé en ce que, ledit processeur (P) comprenant un organe de traitement (7) et une mémoire (8), ladite mémoire est accédée directement par l'un au moins desdits modules d'émission audio (1), de réception audio (2), d'émission radio (3) et de réception radio (4).

11. Circuit de traitement du signal pour le système de radiotéléphone cellulaire numérique européen selon l'une quelconque des revendications 1 à 9 caractérisé en ce que, ledit processeur (P) comprenant un organe de traitement (7), il comprend de plus au moins opérateur spécialisé (9) couplé audit organe de traitement.

12. Circuit de traitement du signal pour le système de radiotéléphone cellulaire numérique européen selon la revendication 10 ou 11 caractérisé en ce que ledit organe de traitement (7) est prévu pour fonctionner à l'aide d'un logiciel de traitement série.

13. Circuit de traitement du signal pour le système de radiotéléphone cellulaire numérique européen selon l'une quelconque des revendications précédentes caractérisé en ce que ledit opérateur de commande (CO) comprend un module d'activation (6) prévu pour adapter lesdits signaux de commande issus dudit circuit de commande (C) et pour produire les signaux d'horloge nécessaires audit processeur (P) et auxdits modules d'émission audio (1) de réception audio (2) d'émission radio (3) et de réception radio (4).

14. Circuit de traitement du signal pour le système de radiotéléphone cellulaire numérique européen selon l'une quelconque des revendications précédentes caractérisé en ce que ledit opérateur de commande (CO) comprend un module d'interface (5) effectuant le transfert desdites données et desdites informations de signalisation sans les interpréter.

## Patentansprüche

1. Signalverarbeitungsschaltung für das für das zellenförmige digitale europäische Funktelefonsystem, in dem kontinuierlich Sprachtastproben mit einer Wandlerschaltung (AD), digitale Signale im Basisband mit einer Hochfrequenzschaltung (R) und Daten und Signalisationsinformationen mit einer Steuerschaltung (C), die auch Steuersignale an die Schaltung überträgt, ausgetauscht werden, dadurch gekennzeichnet, daß sie einen Steueroperator (CO), einen Prozessor (P), der einen Audiooperator (AO) und einen Hochfrequenzoperator (RO) steuert, daß der Audiooperator (AO) die Sprachtastproben vom Empfänger in Form von Tastprobengruppen empfängt bzw. die Sprachtastproben an den Prozessor übermittelt, daß der Hochfrequenzoperator die digitalen Signale im Basisband vom Prozessor in Form von Losen empfängt bzw. diese digitalen Signale im Basisband erzeugt und in Losform an den Prozessor übermittelt, daß der Steueroperator (CO) die Daten, die Signalisationsinformationen und die Steuersignale des Prozessors (P) überträgt und formatiert, daß der Prozessor die digitale Signalverarbeitung insbesondere in einem Endgerät ausgehend von Informationen durchführt, die von den Operatoren erzeugt werden, und die für die Operatoren bestimmten Informationen erzeugt, so daß der Prozessor von den Verarbeitungen entlastet wird, die von den Operatoren durchgeführt werden.

2. Signalverarbeitungsschaltung für das zellenförmige digitale europäische Funktelefonsystem nach Anspruch 1, dadurch gekennzeichnet, daß der Audiooperator (AO) einen Audiosendemodul (1) enthält, der außer der Gruppenbildung der Sprachtastproben den ersten Teil der Sprachkodierung durchführt.

3. Signalverarbeitungsschaltung für das zellenförmige digitale europäische Funktelefonsystem nach Anspruch 1 oder 2, dadurch gekennzeichnet, daß der Audiooperator (AO) einen Audioempfangsmodul (2) enthält, der außer der Übertragung der Sprachsignale ausgehend von den Tastprobengruppen den letzten Teil der Sprachdekodierung durchführt.

4. Signalverarbeitungsschaltung für das zellenförmige digitale europäische Funktelefonsystem nach einem der vorhergehenden Ansprüche, dadurch gekennzeichnet, daß der Hochfrequenzoperator (RO) einen Hochfrequenzsendemodul (3) enthält, der außer der Übertragung der digitalen Signale im Basisband ausgehend von Losen die Modulation der Abschnitte durchführt, die in diesem Fall anstelle der Lose vom Prozessor (P) geliefert werden.

5. Signalverarbeitungsschaltung für das zellenförmige digitale europäische Funktelefonsystem nach einem der vorhergehenden Ansprüche, dadurch gekennzeichnet, daß der Hochfrequenzoperator (RO) einen Hochfrequenzempfangsmodul (4) enthält, der außer der Gruppierung der digitalen Signale im Basisband in Form von Losen eine Abschätzung der Gleichstromkomponente dieser Signale durchführt.

6. Signalverarbeitungsschaltung für das zellenförmige digitale europäische Funktelefonsystem nach Anspruch 5, dadurch gekennzeichnet, daß der Hochfrequenzempfangsmodul (4) außerdem eine Korrektur der Gleichstromkomponente in den digitalen Signalen im Basisband durchführt.

7. Signalverarbeitungsschaltung für das zellenförmige digitale europäische Funktelefonsystem nach Anspruch 5 oder 6, dadurch gekennzeichnet, daß der Hochfrequenzempfangsmodul (4) außerdem die Leistung der digitalen Signale im Basisband mißt.

8. Signalverarbeitungsschaltung für das zellenförmige digitale europäische Funktelefonsystem nach Anspruch 6 oder 7, dadurch gekennzeichnet, daß der Hochfrequenzempfangsmodul (4) außerdem eine Frequenzverschiebung der digitalen Signale im Basisband durchführt.

9. Signalverarbeitungsschaltung für das zellenförmige digitale europäische Funktelefonsystem nach Anspruch 8, dadurch gekennzeichnet, daß der Hochfrequenzempfangsmodul (4) außerdem die digitalen Signale im Basisband filtert.

10. Signalverarbeitungsschaltung für das zellenförmige digitale europäische Funktelefonsystem nach einem beliebigen der vorhergehenden Ansprüche, dadurch gekennzeichnet, daß der Prozessor (P) ein Verarbeitungsorgan (7) und einen Speicher (8) aufweist und daß mindestens einer der Moduln (1 bis 4) unmittelbar Zugang zu dem Speicher hat.

11. Signalverarbeitungsschaltung für das zellenförmige digitale europäische Funktelefonsystem nach einem beliebigen der Ansprüche 1 bis 9, dadurch gekennzeichnet, daß der Prozessor (P) ein Verarbeitungsorgan (7) und außerdem mindestens einen spezialisierten Operator (9) besitzt, der mit dem Verarbeitungsorgan gekoppelt ist.

12. Signalverarbeitungsschaltung für das zellenförmige digitale europäische Funktelefonsystem nach Anspruch 10 oder 11, dadurch gekennzeichnet, daß das Verarbeitungsorgan (7) vorgesehen ist, um mit Hilfe einer SerienverarbeitungsSoftware zu arbeiten.

13. Signalverarbeitungsschaltung für das zellenförmige digitale europäische Funktelefonsystem nach einem beliebigen der vorhergehenden Ansprüche, dadurch gekennzeichnet, daß der Steueroperator (CO) einen Aktivierungsmodul (6) enthält, der die Steuerignale aus der Steuerschaltung (C) anpaßt und die für den Prozessor (P) und die Moduln (1 bis 4) erforderlichen Taktsignale erzeugt.

14. Signalverarbeitungsschaltung für das zellenförmige digitale europäische Funktelefonsystem nach einem beliebigen der vorhergehenden Ansprüche, dadurch gekennzeichnet, daß der Steueroperator (CO) einen Schnittstellenmodul (5) aufweist, der den Transfer der Daten und Signalisationsinformationen bewirkt, ohne diese zu interpretieren.

## Claims

1. Signal processing circuit for the European digital cellular radio system continuously exchanging speech samples with a converter circuit (AD), exchanging baseband digital signals with a radio circuit (R) and exchanging data and signalling information with a control circuit (C) which also transmits control signals to it, characterised in that it comprises a control operator (CO), a processor (P) which controls an audio operator (AO) and a radio operator (RO), said audio operator (AO) receiving and producing said speech samples and respectively transmitting them to said processor and receiving them from said processor in the form of groups of samples, said radio operator (RO) receiving and producing said baseband digital signals and respectively transmitting them to said processor and receiving them from said processor in the form of batches, said control operator (CO) routing and formatting said data, said signalling information and said processor control signals, said processor (P) being adapted to apply digital processing to the signal, in particular in a terminal, on the basis of information produced by said operators and to produce the information addressed to said operators and being thus relieved of the processing operations carried out by said operators.

2. Signal processing circuit for the European digital cellular radio system according to claim 1 characterised in that said audio operator (AO) comprises an audio transmit module (1) which carries out the first part of speech encoding in addition to grouping speech samples.

3. Signal processing circuit for the European digital cellular radio system according to claim 1 or claim 2 characterised in that said audio operator (AO) comprises an audio receive module (2) which carries out the last part of speech decoding in addition to transmitting speech samples based on groups of samples.

4. Signal processing circuit for the European digital cellular radio system according to any one of the preceding claims characterised in that said radio operator (RO) comprises a radio transmit module (3) which modulates bursts provided in this case by said processor (P) instead of batches in addition to transmitting said digital signals in the baseband based on batches.

5. Signal processing circuit for the European digital cellular radio system according to any one of the preceding claims characterised in that said radio operator (RO) comprises a radio receive module (4) which estimates the d.c. component of the digital signals in the baseband in addition to forming said signals into batches.

6. Signal processing circuit for the European digital cellular radio system according to claim 5 characterised in that said radio receive module (4) also corrects the d.c. component of said digital signals in the baseband.

7. Signal processing circuit for the European digital cellular radio system according to claim 5 or claim 6 characterised in that said radio receive module (4) measures the power of said digital signals in the baseband.

8. Signal processing circuit for the European digital cellular radio system according to claim 6 or claim 7 characterised in that said radio receive module (4) also transposes the frequency of said digital signals in the baseband.

9. Signal processing circuit for the European digital cellular radio system according to claim 8 characterised in that said radio receive module (4) also filters said digital signals in the baseband.

10. Signal processing circuit for the European digital cellular radio system according to any one of the preceding claims characterised in that said processor (P) comprising a processing unit (7) and a memory (8) said memory is accessed directly by at least one of the audio transmit (1), audio receive (2), radio transmit (3) and radio receive (4) modules.

11. Signal processing circuit for the European digital cellular radio system according to any one of claims 1 through 9 characterised in that said processor (P) comprising a processing unit (7) it further comprises at least one dedicated operator (9) interfaced to said processing unit.

12. Signal processing circuit for the European digital cellular radio system according to claim 10 or claim 11 characterised in that said processing unit (7) is designed to operate using serial processing software.

13. Signal processing circuit for the European digital cellular radio system according to any one of the preceding claims characterised in that said control operator (CO) comprises an activation module (6) designed to adapt said control signals issued by said control circuit (C) and to produce the clock signals needed by said processor (P) and by said audio transmit (1), audio receive (2), radio transmit (3) and radio receive (4) modules.

14. Signal processing circuit for the European digital cellular radio system according to any one of the preceding claims characterised in that said control operator (CO) comprises an interface module (5) transferring said data and said signalling information without interpreting them.
